# EUROPÄISCHE PATENTSCHRIFT

(11) **EP 0 828 642 B1**
(45) Veröffentlichungstag und Bekanntmachung des Hinweises auf die Patenterteilung: **04.08.1999**
(21) Anmeldenummer: 96917466.3
(22) Anmeldetag: 30.05.1996
(51) Int. Cl.: B60T 13/72

(54) **UNTERDRUCKBREMSKRAFTVERSTÄRKER**
VACUUM BRAKE SERVO
SERVO-FREIN A DEPRESSION

(30) Priorität: 30.05.1995 DE 19519699
(43) Veröffentlichungstag der Anmeldung: 18.03.1998
(73) Patentinhaber: Continental Teves AG & Co. oHG, 60488 Frankfurt (DE)
(72) Erfinder: DROTT, Peter, D-65936 Frankfurt am Main (DE); STÖHR, Frank, D-60433 Frankfurt am Main (DE); KRÄMER, Horst, D-63128 Offenbach (DE)
(86) Internationale Anmeldenummer: EP9602322
(87) Internationale Veröffentlichungsnummer: WO9638329

(56) Entgegenhaltungen:
- WO-A-94/11226

## Beschreibung

Die Erfindung betrifft einen Unterdruckbremskraftverstärker gemäß dem Oberbegriff des Patentanspruchs 1.

Ein derartiger Unterdruckbremskraftverstärker ist aus der DE 43 24 688 A1 bekannt.

Aufgabe der Erfindung ist es, einen Unterdruckbremskraftverstärker zu verbessern, insbesondere im Hinblick auf einen einfachen Aufbau und eine kostengünstige Fertigung.

Die Lösung der Aufgabe ergibt sich aus dem kennzeichnenden Teil des Patentanspruchs 1. Bei zweiteiligen Steuergehäusen, die ein Hauptteil und ein axial aufgestecktes Deckelteil aufweisen, wobei der Elektromagnet auf der einen Axialseite im Hauptteil und auf der anderen Axialseite im Deckelteil gelagert ist, kommt es toleranzbedingt zu einer exzentrischen Position der Lagerpunkte in bezug auf die Symmetrieachse des Unterdruckbremskraftverstärkers und somit zu einer Schrägstellung des Elektromagneten. Dies kann zu Undichtigkeiten am Steuerventil und zu erhöhtem Verschleiß an den Lagerstellen führen. Um eine bessere Zentrierung unter allen auftretenden Toleranzbedingungen zu gewährleisten, sieht die Erfindung vor, daß das Deckelteil mit axial vorspringenden Zentriersegmenten versehen ist, die beim Zusammenbau das Steuergehäuse elastisch verformen und dabei spielfrei zentrieren. Dies erfolgt ohne weiteres Zutun des Monteurs automatisch, ohne daß zusätzliche Fertigungskosten anfallen. Die Zentriersegmente selbst werden bei der Fertigung des Deckelteils gleich miteingeformt, ebenfalls ohne zusätzliche Kosten zu verursachen. In einer bevorzugten Ausführungsform sind vier Zentriersegmente vorgesehen, die radial von innen am Hauptteil angreifen und beim Zusammenbau das Hauptteil aufweiten.

Da es im Betrieb ebenfalls auf eine in Umfangsrichtung positionierte Lagerung des Deckelteils in bezug auf den Elektromagneten ankommt, sind in einer Weiterbildung der Erfindung zusätzliche axiale Vorsprünge mit Schlupffasen am Deckelteil vorgesehen, die mit einem radialen Vorsprung des Hauptteils zusammenwirken und beim Zusammenbau von Deckelteil und Hauptteil die gegenseitige Winkellage bestimmen.

Das Deckelteil weist in einer bevorzugten Ausführungsform in seinem radial äußeren Randbereich eine Aussparung zum Durchgang elektrischer Kabel auf, die von zwei radial vorstehenden Armen seitlich begrenzt ist. Das erfindungsgemäße Deckelteil läßt sich noch verbessern, indem von den Armen ausgehende Abstandshalter vorgesehen sind, die axial nach außen bis in den Bereich einer Gerätefeder ragen. Auf diese Weise wird verhindert, daß die vom Elektromagneten nach außen führenden elektrischen Kabel sich zwischen dem Führungsrohr des Steuergehäuses und der Gerätefeder bzw. deren Federführungsteller im Betrieb verklemmen. Dabei wird für die Kabel auch unter denkbar ungünstigen Bedingungen, wie z. B. Aufweitung der Gerätefeder, Querkräfte aus der Federverformung oder bei Exzentrizitäten ein ausreichender Durchgang freigehalten.

Gemäß einer weiteren Verbesserung ist im Steuergehäuse im radialen Bereich zwischen dem Deckelteil und dem Führungsrohr im Bereich des Durchgangs durch das Deckelteil ein Kabelhalter zur Fixierung der Kabel angeordnet. Durch eine derartige Maßnahme sind die Kabel in einer definierten Lage geführt und ein Verschleiß der Kabel durch Reiben an Gehäuseteilen, wie beispielsweise der Gerätefeder wird verhindert. Weiterhin kann eine Zugentlastung der Kabel an den Verbindungsstellen zum Elektromagneten oder eine Aufnahme von Biege- und Torsionsmomenten zur Entlastung eines Kabelbaums des Elektromagneten oder eines Löseschalters durch eine entsprechende Ausgestaltung des Kabelhalters erzielt werden.

Der efindungsgemäße Kabelhalter kann einstückig oder vorzugsweise zweiteilig aus Blech oder Kunststoff bestehen. Bei der zweiteiligen Ausführungsform können die Kabel zwischen den beiden Teilen eingeklemmt werden. Bei einer Ausführungsform aus Kunststoff können auch die Kabel von einem Kunststoffmantel umspritzt sein. Derartige Ausführungsformen sind im Hinblick auf eine einfache Montage und günstige Fertigungskosten besonders vorteilhaft.

Eine Weiterbildung der Erfindung sieht vor, daß ein zweiter Kabelhalter außerhalb des Steuergehäuses am Ende eines Kabelbaums angeordnet ist. Auf diese Weise erhält man eine Zugentlastung der Kabel gegenüber dem Kabelbaum.

Ausführungsbeispiele der Erfindung werden nachfolgend anhand der Zeichnungen näher erläutert.

Es zeigen:

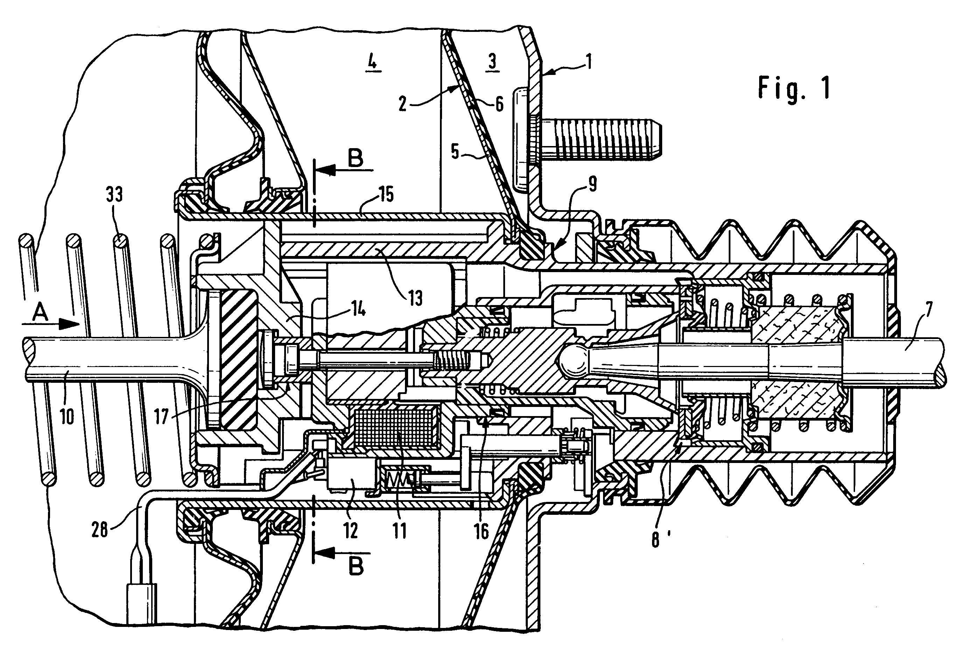

- Fig. 1: eine geschnittene Teilansicht eines erfindungsgemäßen Unterdruckbremskraftverstärkers,

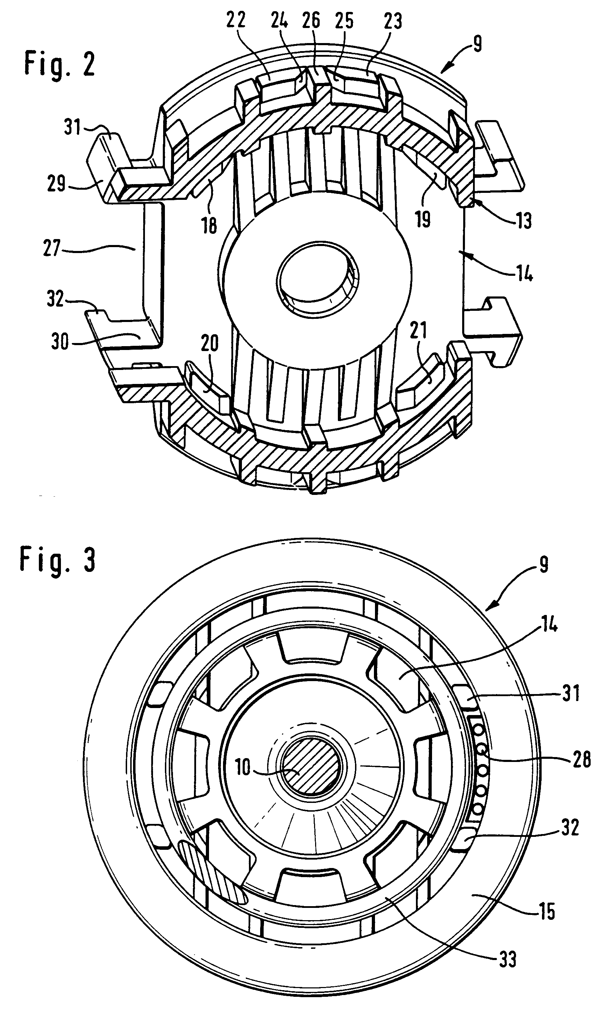

- Fig. 2: eine teilweise gemäß Linie B - B aus Fig. 1 geschnittene Ansicht des Steuergehäuses mit dem Deckelteil,
- Fig. 3: eine Ansicht des Steuergehäuses mit dem Deckelteil aus Richtung A von Fig.1,
- Fig. 4: eine geschnittene Teilansicht entsprechend etwa Fig. 1 einer weiteren Ausführungsform der Erfindung.

Das Verstärkergehäuse 1 des dargestellten erfindungsgemäßen Unterdruckbremskraftverstärkers ist durch eine axial bewegliche Wand 2 in eine Arbeitskammer 3 und eine Unterdruckkammer 4 unterteilt. Diese axial bewegliche Wand besteht aus einem aus Blech tiefgezogenen Membranteller 5 und einer daran anliegenden flexiblen Membran 6, die nicht näher dargestellt zwischen dem äußeren Umfang des Membrantellers 5 und dem Verstärkergehäuse 1 eine Rollmembran als Abdichtung bildet.

Über eine Betätigungsstange 7 wird ein Steuerventil 8 betätigt, das in einem Steuergehäuse 9 untergebracht ist. Das Steuergehäuse 9 ist im Verstärkergehäuse 1 axial verschieblich und abgedichtet geführt. Am Steuergehäuse 9 ist die bewegliche Wand 2 befestigt. Die Bremskraft wird über das Steuergehäuse 9 auf eine Druckstange 10 übertragen, die den Betätigungskolben eines nicht dargestellten Hauptzylinders einer Bremsanlage betätigt.

Um eine von der Betätigungsstange 7 unabhängige Fremdbetätigung des erfindungsgemäßen Unterdruckbremskraftverstärkers einzuleiten, ist ein Elektromagnet 11 vorgesehen, mit dem das Steuerventil 8 betätigbar ist. Bei Betätigung des Steuerventils 8 mit dem Elektromagneten 11 wird die Arbeitskammer 3 mit Atmosphärendruck beaufschlagt, so daß die Wand 2 in Richtung Unterdruckkammer 4 gedrückt und die auf den Hauptzylinder über die Druckstange 10 einwirkende Betätigungskraft im Rahmen einer Notbremsung bis zum maximal möglichen Wert verstärkt wird. Zur Beendigung der Notbremsung dient ein Löseschalter 12, der ein Lösen des Elektromagneten 11 bewirkt, sobald die Betätigungskraft auf die Betätigungsstange 7 zurückgenommen wird.

Das Steuergehäuse 9 besteht aus einem Hauptteil 13 und einem Deckelteil 14, die in einem Führungsrohr 15 angeordnet und verbunden sind. Das Deckelteil 14 ist auf das Hauptteil 13 axial aufgesteckt. Der Elektromagnet 11 ist auf der einen Axialseite 16 im Hauptteil 13 und auf der anderen Axialseite 17 im Deckelteil 14 gelagert. Das Deckelteil 14 ist mit axial vorspringenden Zentriersegmenten 18,19,20,21 versehen, die beim Zusammenbau des Steuergehäuses 9 das Hauptteil 13 ela stisch verformen und dabei spielfrei zentrieren. Dabei wird das Hauptteil 13 von den vier in Umfangsrichtung ungefähr gleichmäßig angeordneten Zentriersegmenten 18,19,20,21 in seinem Randbereich etwas aufgeweitet, da die Zentriersegmente 18,19,20,21 auf den Innendurchmesser des Hauptteils 13 derart abgestimmt sind, daß sie radial von innen nach außen drücken.

Weiterhin ist das Deckelteil 14 mit zwei zusätzlichen axialen Vorsprüngen 22,23 versehen, die jeweils eine Schlupffase 24,25 aufweisen. Beim Zusammenbau des Steuergehäuses 9 wird das Deckelteil 14 axial auf das Hauptteil 13 aufgesteckt, wobei ein radialer Vorsprung 26 des Hauptteils 13 mit den Schlupffasen 24,25 der Vorsprünge 22,23 zusammenwirkt und die beiden Teile 13,14 gegeneinander verdreht, bis die durch die Vorsprünge 22,23,26 vorbestimmte gegenseitige Winkellage eingenommen wird.

Das Deckelteil weist in seinem radial äußeren Randbereich eine Aussparung 27 auf, die zum Durchgang elektrischer Kabel 28 bestimmt ist, die vom Elektromagneten 11 ausgehend aus dem Steuergehäuse 9 in achsparalleler Richtung herausführen. Das Deckelteil 13 ist mit zwei Armen 29,30 versehen, die die Aussparung 27 seitlich begrenzen und radial bis zum Führungsrohr 15 vorstehen. Von den Armen 29,30 gehen einstückig ausgebildete Abstandhalter 31,32 aus und stehen axial nach außen bis in den Bereich einer Gerätefeder 33 vor.

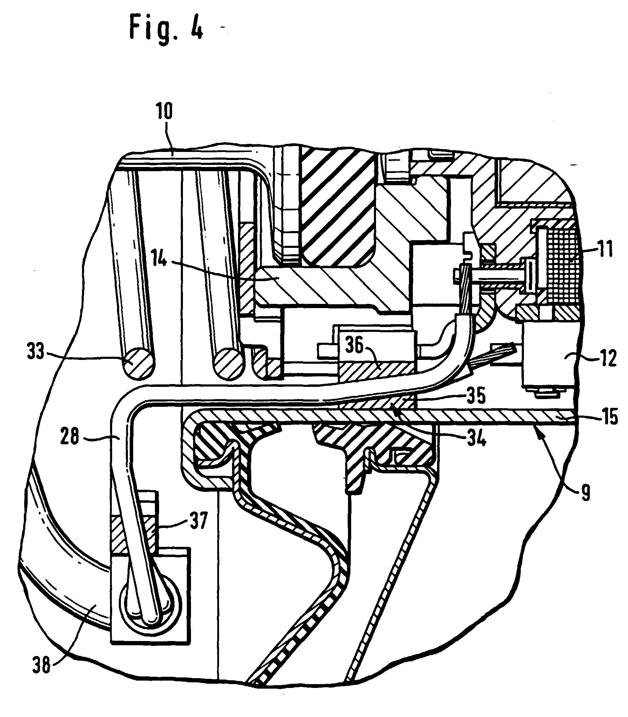

Bei der in Fig. 4 dargestellten Ausführungsform ist radial zwischen dem Deckelteil 14 und dem Führungsrohr 15 und axial im Bereich des Deckelteils 14 ein Kabelhalter 34 zur Fixierung der Kabel 28 angeordnet. Der Kabelhalter 34 besteht aus Kunststoff und ist aus zwei Teilen 35,36 zusammengesetzt, zwischen denen die Kabel 28 eingeklemmt sind. Ein zweiter Kabelhalter 37 ist außerhalb des Steuergehäuses 9 am Ende eines Kabelbaums 38 angeordnet.

In einer nicht dargestellten Ausführungsform ist ein Kabelhalter dadurch gebildet, daß die Kabel 28 von einem Kunststoffmantel umspritzt sind.

## Patentansprüche

1. Unterdruckbremskraftverstärker für Kraftfahrzeuge; mit einem Verstärkergehäuse (1), dessen Innenraum durch eine bewegliche Wand (2) in eine Unterdruckkammer (4) und eine Arbeitskammer (3) unterteilt ist; mit einem die bewegliche Wand (2) tragenden Steuergehäuse (9), in dem ein Steuerventil (8) angeordnet ist, das durch eine Betätigungsstange (7) betätigbar ist und eine auf die bewegliche Wand (2) einwirkende Druckdifferenz steuert; und mit einem Elektromagneten (11), der auf das Steuerventil (8) einwirkt und eine Belüftung der Arbeitskammer (3) unabhängig von der Betätigungsstange (7) ermöglicht, **dadurch gekennzeichnet,** daß das Steuergehäuse (9) ein Hauptteil (13) aufweist, das zusammen mit einem axial aufgesteckten Deckelteil (14) in einem Führungsrohr (15) angeordnet und verbunden ist, wobei der Elektromagnet (11) auf der einen Axialseite (16) im Hauptteil (13) und auf der anderen Axialseite (17) im Deckelteil (14) gelagert ist, und daß das Deckelteil (14) mit axial hervorspringenden Zentriersegmenten (18,19,20,21) versehen ist, die beim Zusammenbau des Steuergehäues (9) das Hauptteil (13) elastisch verformen und dabei spielfrei zentrieren.

2. Unterdruckbremskraftverstärker nach Anspruch 1, **dadurch gekennzeichnet,** daß vier Zentriersegmente (18,19,20,21) vorgesehen sind, die radial von innen am Hauptteil (13) angreifen und beim Zusammenbau das Hauptteil (13) aufweiten.

3. Unterdruckbremskraftvertärker nach Anspruch 1 oder 2, **dadurch gekennzeichnet,** daß das Deckelteil (14) zwei zusätzliche axiale Vorsprünge (22, 23) mit Schlupffasen (24,25) aufweist, die mit einem radialen Vorsprung (26) des Hauptteils (13) zusammenwirken und beim Zusammenbau vom Deckelteil (14) und Hauptteil (13) die gegenseitige Winkellage bestimmen.

4. Unterdruckbremskraftverstärker nach einem der vorhergehenden Ansprüche, **dadurch gekennzeichnet,** daß das Deckelteil (13) im radial äußeren Randbereich eine Aussparung (27) zum Durchgang elektrischer Kabel (28) aufweist, die von zwei radial vorstehenden Armen (29,30) seitlich begrenzt ist, und daß von den Armen (29,30) ausgehende Abstandhalter (31,32) vorgesehen sind, die axial nach außen bis in den Bereich einer Gerätefeder (33) ragen.

5. Unterdruckbremskraftverstärker nach einem der vorhergehenden Ansprüche, **dadurch gekennzeichnet,** daß die zum Elektromagneten (11) führenden elektrischen Kabel (28) in achsparalleler Richtung in das Steuergehäuse (9) hinein und radial zwischen dem Deckelteil (14) und dem Führungsrohr (15) verlaufen und daß zumindest axial im Bereich des Deckelteils (14) ein Kabelhalter (34) zur Fixierung der Kabel (28) angeordnet ist.

6. Unterdruckbremskraftverstärker nach Anspruch 5, **dadurch gekennzeichnet,** daß der Kabelhalter aus Blech besteht.

7. Unterdruckbremskraftverstärker nach Anspruch 5, **dadurch gekennzeichnet,** daß der Kabelhalter (34) aus Kunststoff besteht.

8. Unterdruckbremskraftverstärker, nach Anspruch 7, **dadurch gekennzeichnet**, daß der Kabelhalter (34) zweiteilig ausgeführt ist und daß die Kabel (28) zwischen den beiden Teilen (35,36) eingeklemmt sind.

9. Unterdruckbremskraftverstärker nach Anspruch 7, **dadurch gekennzeichnet,** daß die Kabel (28) mit einem Kunststoffmantel umspritzt sind.

10. Unterdruckbremskraftverstärker nach einem der Ansprüche 5 bis 9, **dadurch gekennzeichnet,** daß ein zweiter Kabelhalter (37) außerhalb des Steuergehäuses (9) am Ende eines Kabelbaums (38) angeordnet ist.

## Claims

1. Vacuum brake power booster for automotive vehicles, including a booster housing (1) having its interior subdivided by a movable wall (2) into a vacuum chamber (4) and a working chamber (3); a control housing (9) which carries the movable wall (2) and accommodates a control valve (8) that is operable by an actuating rod (7) and controls a pressure difference acting upon the movable wall (2); and a solenoid (11) which acts upon the control valve (8) and permits ventilating the working chamber (3) irrespective of the actuating rod (7),
**characterized** in that the control housing (9) has a main part (13) which is arranged and connected in a guide tube (15) along with a cover part (14) slipped axially onto the main part, wherein the solenoid (11) is mounted in the main part (13) on one axial side (16) and in the cover part (14) on the other axial side (17), and in that the cover part (14) includes axially protruding centering segments (18, 19, 20, 21) which elastically deform the main part (13) and center it in a clearance-free manner during the assembly of the control housing (9).

2. Vacuum brake power booster as claimed in claim 1,
**characterized** in that four centering segments (18, 19, 20, 21) are provided which make catch at the main part (13) from radially inwardly and expand the main part (13) during the assembly.

3. Vacuum brake power booster as claimed in claim 1 or claim 2, **characterized** in that the cover part (14) has two additional projections (22, 23) with slip chamfers (24, 25) which interact with a radial projection (26) on the main part (13) and determine the mutual angular position in the assembly of the cover part (14) and the main part (13).

4. Vacuum brake power booster as claimed in any one of the preceding claims,
**characterized** in that the cover part (14) includes in its radially outward fringe area a recess (27) for electric cables (28) to pass through, the recess being laterally defined by two radially projecting arms (29, 30), and in that spacers (31, 32) extend from the arms (29, 30) and project axially outwardly until the area of a system spring (33).

5. Vacuum brake power booster as claimed in any one of the preceding claims,
**characterized** in that the electric cables (28) which extend to the solenoid (11) lead in a paraxial direction into the control housing (9) and radially between the cover part (14) and the guide tube (15), and in that a cable support (34) for fixing the cables (28) is arranged at least axially in the area of the cover part (14).

6. Vacuum brake power booster as claimed in claim 5,
**characterized** in that the cable support is made of sheet metal.

7. Vacuum brake power booster as claimed in claim 5,
**characterized** in that the cable support (34) is made of plastic material.

8. Vacuum brake power booster as claimed in claim 7,
**characterized** in that the cable support (34) has a two-part design, and in that the cables (28) are squeezed between the two parts (35, 36).

9. Vacuum brake power booster as claimed in claim 7,
**characterized** in that the cables (28) are spray-coated with plastics material.

10. Vacuum brake power booster as claimed in any one of claims 5 to 9,
**characterized** in that a second cable holder (37) is located outside the control housing (9) on the end of a cable tree (38).

## Revendications

1. Amplificateur de force de freinage à dépression pour véhicule automobile, comprenant un boîtier d'amplificateur (1), dont la cavité est divisée par une cloison mobile (2) entre une chambre à dépression (4) et une chambre de travail (3), un boîtier de commande (9), qui porte la cloison mobile (2) et dans lequel est disposée une valve de commande (8) qui peut être actionnée au moyen d'une tige d'actionnement (7) et commande une différence de pression s'exerçant sur la cloison mobile (2), et un électro-aimant (11) qui exerce son action sur la valve de commande (8) et permet une mise à l'air de la chambre de travail (3) indépendamment de la tige d'actionnement (7), caractérisé en ce que le boîtier de commande (9) comprend une partie principale (13) qui est disposée avec une partie formant couvercle (14), emboîtée axialement, dans un tube de guidage (15) et lui est reliée, l'électro-aimant (11) étant monté d'un premier côté axial (16) dans la partie principale (13) et de l'autre côté axial (17) dans la partie formant couvercle (14) et en ce que la partie formant couvercle (14) est pourvue de segments de centrage (18, 19, 20, 21) en saillie axiale qui, lors de l'assemblage du boîtier de commande (9), déforment élastiquement la partie principale (13) et la centrent alors sans jeu.

2. Amplificateur de force de freinage à dépression suivant la revendication 1, caractérisé en ce qu'il est prévu quatre segments de centrage (18, 19, 20, 21) qui s'accrochent radialement de l'intérieur sur la partie principale (13) et, lors de l'assemblage, élargissent la partie principale (13).

3. Amplificateur de force de freinage à dépression suivant la revendication 1 ou 2, caractérisé en ce que la partie formant couvercle (14) comporte deux saillies axiales (22, 23) supplémentaires qui présentent des biseaux de glissement (24, 25) qui coopèrent avec une saillie radiale (26) de la partie principale (13) et déterminent, lors de l'assemblage de la partie formant couvercle (14) et de la partie principale (13), la position angulaire relative.

4. Amplificateur de force de freinage à dépression suivant l'une des revendications précédentes, caractérisé en ce que la partie formant couvercle (13) comporte, dans la zone marginale radialement extérieure, un évidement (27) qui sert au passage de câbles électriques (28) et qui est délimité latéralement par deux bras (29, 30) en saillie radiale et en ce qu'il est prévu des éléments de maintien d'espacement (31, 32) qui se dressent sur les bras (29, 30) et qui font saillie axialement vers l'extérieur jusque dans la zone d'un ressort d'assemblage (33).

5. Amplificateur de force de freinage à dépression suivant l'une des revendications précédentes, caractérisé en ce que les câbles électriques (28) menant à l'électro-aimant (11) pénètrent suivant une direction parallèle à l'axe dans le boîtier de commande (9) et radialement entre la partie formant couvercle (14) et le tube de guidage (15) et en ce qu'un support de câbles (34) servant à l'immobilisation des câbles (28) est disposé au moins axialement dans la zone de la partie formant couvercle (14).

6. Amplificateur de force de freinage à dépression suivant la revendication 5, caractérisé en ce que le support de câbles est en tôle.

7. Amplificateur de force de freinage à dépression suivant la revendication 5, caractérisé en ce que le support de câbles (34) est en matière plastique.

8. Amplificateur de force de freinage à dépression suivant la revendication 7, caractérisé en ce que le support de câbles (34) est réalisé en deux parties et en ce que les câbles (28) sont serrés entre les deux parties (35, 36).

9. Amplificateur de force de freinage à dépression suivant la revendication 7, caractérisé en ce que les câbles (28) sont entourés à l'injection par une gaine de matière plastique.

10. Amplificateur de force de freinage à dépression suivant l'une des revendications 5 à 9, caractérisé en ce qu'un second support de câbles (37) est disposé à l'extérieur du boîtier de commande (9), à l'extrémité d'un faisceau de câbles (38).
